## Europäisches Patentamt

## European Patent Office

## Office européen des brevets

(11) Veröffentlichungsnummer: **0 097 622**
**B1**

## EUROPÄISCHE PATENTSCHRIFT

(45) Veröffentlichungstag der Patentschrift:
24.02.88

(51) Int. Cl.⁴: **B 62 D 61/02**, B 62 K 17/00

(21) Anmeldenummer: 83810278.8

(22) Anmeldetag: 22.06.83

(54) Einspur-Kabinenfahrzeug.

(30) Priorität: 23.06.82 CH 3832/82

(43) Veröffentlichungstag der Anmeldung:
04.01.84 Patentblatt 84/1

(45) Bekanntmachung des Hinweises auf die Patenterteilung:
24.02.88 Patentblatt 88/8

(84) Benannte Vertragsstaaten:
DE FR GB IT

(56) Entgegenhaltungen:
AT-B-111 995
DE-C-1 007 645
DE-C-1 067 326
FR-A-884 648

**Die Akte enthält technische Angaben, die nach dem Eingang der Anmeldung eingereicht wurden und die nicht in dieser Patentschrift enthalten sind.**

(73) Patentinhaber: **Peraves AG für Flug- und Fahrzeugentwicklungen, Oberfeldstrasse 53, CH-8408 Winterthur (CH)**

(72) Erfinder: **Wagner, Arnold, Oberfeldstrasse 44 A, CH- 8408 Winterthur (CH)**

LIBER, STOCKHOLM 1988

## Beschreibung

Die Erfindung betrifft ein Einspur-Kabinenfahrzeug entsprechend dem Oberbegriff des Anspruchs 1.

Zur Erzielung einwandfreier Fahreigenschaften von Einspurfahrzeugen ist es wichtig, dass Lenkkopf und Hinterradführung möglichst steif miteinander verbunden sind. Sie dürfen sich gegenseitig weder verdrehen noch die gegenseitige Lage sonstwie verändern, um Lenkerflattern, Hochgeschwindigkeitspendeln und andere Fahrzeugunruhen zu vermeiden.

Es ist bekannt, die Kräfte zwischen Lenkkopf und Hinterradführung über eine Gitter-Rohrrahmenkonstruktion um Insassen und Nutzlast herumzuleiten. Ein Beispiel dafür ist die Konstruktion von Baumm/NSU ("Liegestuhl-Rekordfahrzeug"). Derartige Konstruktionen weisen zwar - bei geringem Baugewicht und Materialaufwand - eine höhere Steifigkeit auf als eine tragende Innenrahmenkonstruktion, dafür können sich Schwierigkeiten bei der Einleitung der Kräfte vom Lenkkopf und von der Hinterradführung in die tragende Struktur ergeben.

Bei einem Kabinenfahrzeug der eingangs genannten Art, einem Tretfahrzeug, sind die Formen der das Vorderrad umgebenden ersten Schale und der diese umgebenden vorderen Partie der zweiten Schale hauptsächlich durch den Platzbedarf für die Tretpedale und die Beine des Fahrers bestimmt (FR-A-884 648). Der Lenkkopf des bekannten Tretfahrzeuges ist durch ein Führungsrohr gebildet, das die erste Schale mit einem die zweite Schale nach oben abschliessenden Wandteil verbindet. Zur Übertragung der bei diesem Fahrzeug auftretenden, relativ geringen Kräfte sind Verstärkungselemente für die Ränder einer relativ kleinen Einstiegsöffnung vorgesehen. Diese bekannte Konstruktion ist für die Übertragung von Kräften, wie sie etwa bei Motor-Kabinenfahrzeugen auftreten, wenig geeignet. Im Zusammenhang mit einem derartigen Fahrzeug mit entsprechend hoch belasteten Karosserieteilen würde die bekannte Konstruktion zu einer relativ schweren Bauweise führen.

Der Erfindung liegt die Aufgabe zugrunde, ein insbesondere in dieser Hinsicht verbessertes Kabinenfahrzeug zu schaffen, dessen Konstruktion eine zuverlässige, möglichst einfache und hohe örtliche Beanspruchungen vermeidende Übertragung der Kräfte zwischen Lenkkopf und Hinterradführung gewährleistet. Zugleich soll die Steifigkeit der Verbindung zwischen Front- und Rumpfpartie erhöht, der Bauaufwand reduziert und die Isolation gegenüber bisherigen Konstruktionen verbessert werden.

Diese Aufgabe wird durch die im kennzeichnenden Teil des Anspruchs 1 angegebene Erfindung gelöst. Die das Vorderrad umgebende glockenartige erste Schale weist die durch die notwendige Bodenfreiheit und den Neigungswinkel des Fahrzeuges in Kurven bedingte Öffnung auf. Die durch Gewicht, Beschleunigung, Bremsen usw. verursachten Kräfte und Momente am Vorderrad werden durch den Lenkkopf in die glockenartige erste Schale geleitet. Durch die erfindungsgemässe Konstruktion werden unerwünschte Verformungen der beiden Schalen vermieden und es wird, nachdem die erste Schale auch als Kotflügel wirkt, eine gute Isolation gegen aussen gewährleistet. Die über die erste Schale und über die Führungseinrichtung des Hinterrades eingeleiteten Kräfte werden über die die festigkeitsgebende Rumpfpartie bildende zweite Schale übertragen, deren Ausmasse vorwiegend durch die Anordnung der Nutzlast, der Anzahl Insassen sowie der gewünschten Bodenfreiheit und Seitenneigung bestimmt sind.

In den abhängigen Patentansprüchen sind weitere Ausgestaltungen der Erfindung hervorgehoben.

Die Ausführungsform nach Anspruch 2 ergibt, zufolge der Kraftübertragung an der Peripherie, eine Fahrwerkkonstruktion. mit höchster Steifigkeit und gestattet zugleich eine besonders zweckmässige Aussenformgebung der Kabine.

Durch die Ausführungen nach den Ansprüchen 3 und 4 können, bei gewissen Grössenverhältnissen sowie gegebenenfalls zur weiteren Versteifung, die Vorteile der erfindungsgemässen Ausführung noch vergrössert oder das Baugewicht und der Materialaufwand weiter reduziert werden. Dazu können auch etwa schräge Querstreben und/oder geschlossene rohrförmige Verstärkungsquerschnitte, z. B. in der Nähe des Kiels der bootsförmigen Rumpfpartie, angeordnet werden.

Die nähere Erläuterung der Erfindung erfolgt anhand eines in der Zeichnung schematisch dargestellten Ausführungsbeispiels.

Es zeigen:

Fig. 1 ein erfindungsgemäss ausgebildetes Kabinenfahrzeug in einer Seitenansicht,

Fig. 2 das Kabinenfahrzeug in einer Draufsicht,

Fig. 3 einen Längsschnitt entsprechend der Linie III-III in der Fig. 2, Fig. 4 eine Draufsicht auf den unteren Teil des Kabinenfahrzeuges entsprechend der Linie IV-IV in der Fig. 1,

Fig. 5 eine Frontansicht des Kabinenfahrzeuges nach Fig. 1, und

Fig. 6 einen Querschnitt entsprechend der Linie VI-VI in der Fig. 1

Das in der Zeichnung dargestellte Kabinenfahrzeug enthält eine untere Rumpfpartie 1, welche nach Art eines Bootskörpers in Form einer nach oben offenen Schale ausgebildet ist, und eine auf diese aufgesetzte obere Rumpfpartie 2 welche in Form einer nach unten offenen Schale ausgebildet und mit der unteren Rumpfpartie 1 verbunden ist. Die obere Rumpfpartie 2 weist einen verglasten Vorderteil 3 auf, welcher einen Raum 5 für Fahrer und

Mitfahrer überdeckt, sowle einen Heckteil 4, welcher einen in der unteren Rumpfpartie 1 angeordneten Motor 6 und einen Gepäckraum 7 überdeckt. Der Fahrerraum 5 ist durch eine nach oben aufklappbare Seitenwandpartie 8 des Vorderteils 3 zugänglich, welche an einem in Fahrzeuglängsrichtung verlaufenden Verstärkungsträger 10 des Vorderteils 3 schwenkbar angelenkt ist.

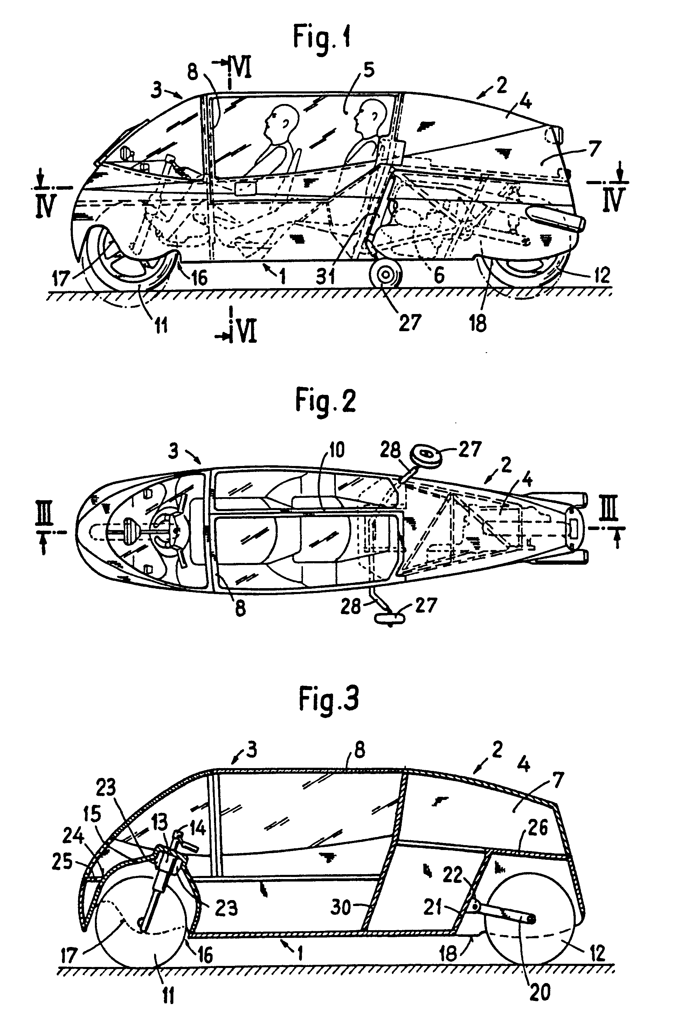

Das Kabinenfahrzeug weist ein Vorderrad 11 und ein Hinterrad 12 auf. Wie aus der Fig. 3 hervorgeht, ist das Vorderrad 11 mit seinem Lenker 14 in einem Lenkkopf 13 geführt, welcher am oberen Ende einer das Vorderrad glockenartig umgebenden Frontpartie 15 der Karosserie befestigt ist. Die Frontpartie 15 ist in Form einer nach unten offenen Schale ausgebildet, welche in einen im Bodenbereich der unteren Rumpfpartie 1 vorgesehenen Ausschnitt 16 eingesetzt und mit der sie teilweise überschneidenden Rumpfpartie 1 entlang einer gemeinsamen Schnittlinie 17 fest verbunden ist. Der Verlauf der Schnittlinien 17 und die Grösse des Ausschnittes 16 sind durch die Formgebung der Rumpfpartie 1 und der Frontpartie 15 sowie durch die notwendige Bodenfreiheit und den Neigungswinkel des Fahrzeuges bei Kurvenfahrt bedingt.

Das Hinterrad 12 ist in einem Bodenausschnitt 18 der Rumpfpartie 1 angeordnet und in Schwingen 20 gelagert, welche an einem die Rumpfpartie 1 nach hinten abschliessenden Querspant 21 in Schwingenlagern 22 angelenkt sind und welche in bekannter Weise an der Rumpfpartie 1 gefedert abgestützt sind. Das Hinterrad 12 kann auch in einer ähnlich der Frontpartie 15 ausgebildeten, nach unten offenen Schale angeordnet sein, welche die Hinterradführung enthält.

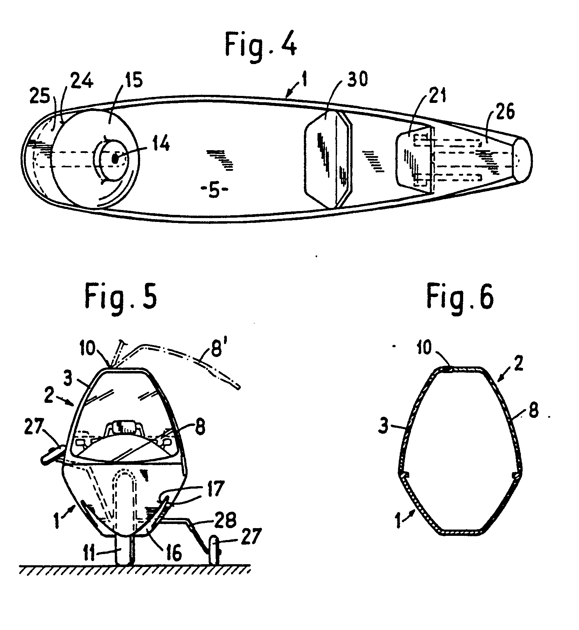

Zur Befestigung des Lenkkopfes 13 kann die Frontpartie 15, durch Versteifungsrippen 23 verstärkt sein oder in ihrem Kopfbereich eine entsprechend grössere Wandstärke aufweisen. Entsprechend der Darstellung in den Figuren 3 und 4 kann die Frontpartie 15 entlang einer Schnittlinie 24 mit einer den oberen Rand der Rumpfpartie im Bugbereich versteifenden Deckplatte 25 verbunden sein. Eine entsprechende Deckplatte 26 verbindet im Heckbereich den Querspant 21 mit dem oberen Rand der Rumpfpartie 1.

Das Kabinenfahrzeug ist mit Stützrädern, 27 versehen, welche auf Schwenkarmen 28 angeordnet sind. Die Schwenkarme 28 sind auf nicht weiter dargestellte Weise, z. B. an einem die Rumpfpartie 1 unterteilenden Querspant 30, im Fahrzeug gelagert und durch Schlitze 31 der Rumpfpartie 1 herausgeführt.

## Patentansprüche

1. Einspur-Kabinenfahrzeug mit einer selbsttragenden Karosserie, welche eine ein Vorderrad (11) umgebende, nach unten offene Frontpartie (15) mit einem Lenkkopf (13) zur Führung des Vorderrades (11) und eine einen Nutzraum (5) zumindest teilweise umgebende Rumpfpartie (1) mit einer Einrichtung (20) zur Führung eines Hinterrades (12) aufweist, wobei die Frontpartie (15) eine zur Aufnahme des Vorderrades (11) bestimmte, selbsttragende erste Schale enthält, wobei die Rumpfpartie (1) eine nach der Art eines Bootskörpers ausgebildete, zumindest im Bereich des Nutzraumes (5) nach oben offene zweite Schale enthält, welche einen die untere Randpartie der ersten Schale zumindest teilweise umschliessenden, nach unten offenen Ausschnitt (16) aufweist und entlang einer gemeinsamen Schnittlinie (17) mit der ersten Schale fest verbunden ist, und wobei die Führungseinrichtung (20) für das Hinterrad (12) am hinteren Bereich der zweiten Schale befestigt ist, dadurch gekennzeichnet, dass die erste Schale das Vorderrad (11) im wesentlichen glockenartig umgibt und dass der Lenkkopf (13) ausschliesslich am obersten Teil dieser ersten Schale befestigt ist.

2. Fahrzeug nach Anspruch 1, dadurch gekennzeichnet, dass die gemeinsame Schnittlinie (17) der beiden Schalen im Bodenbereich der zweiten Schale liegt und im wesentlichen durch die untere Randpartie der ersten Schale und die den Ausschnitt (16) begrenzende Partie der zweiten Schale gebildet ist.

3. Fahrzeug nach Anspruch 1 oder 2, dadurch gekennzeichnet, dass der Lenkkopf (13) mit dem oberen Teil der glockenförmigen, ersten Schale über Versteifungselemente (23) starr verbunden ist.

4. Fahrzeug nach einem der vorangehenden Ansprüche, dadurch gekennzeichnet, dass die glockenförmige, erste Schale über in Querrichtung und/oder in Längsrichtung verlaufende Versteifungselemente (25) mit dem oberen Randbereich der zweiten Schale verbunden ist.

## Claims

1. A single-track cabin vehicle comprising a self-supporting body comprising a front part (15) which is open at the bottom and which surrounds a front wheel (11) and has a steering head (13) to guide the front wheel (11), and a fuselage part (1) which at least partially surrounds a useful space, with means (20) for guiding a rear wheel (12), the front part (15) comprising a self-supporting first shell adapted to accommodate the front wheel (11), while the fuselage part (1) comprises a second shell which is open at the top at least in the area of the useful space (5) and which is constructed after the style of a ship's hull, said second shell comprising a cutout (16) which is open at the bottom and at least partially encloses the bottom edge part of the first shell and is rigidly connected to the first shell along a common line of intersection (17), the guide means (20) for the rear wheel (12) being secured to the rear zone of the second shell, characterised in that the first shell surrounds the front wheel (11) substantially after the style of a bell and the steering head (13) is secured solely to the topmost part of this first shell.

2. A vehicle according to claim 1, characterised in that the common line of intersection (17) of the two shells is situated in the bottom zone of the second shell and is formed substantially by the bottom edge part of the first shell and that part of the second shell which bounds the cut-out (16).

3. A vehicle according to Claim 1 or 2, characterised in that the steering head (13) is rigidly connected to the upper part of the bell-shaped first shell by stiffening elements (23).

4. A vehicle according to one of the preceding claims characterised in that the bell-shaped first shell is connected to the upper edge region of the second shell by stiffening elements (25) running perpendicularly and/or lengthwise.

**Revendications**

1. Véhicule monorail à cabine présentant une carrosserie autoporteuse qui comprend une partie frontale (15) ouverte vers le bas, entourant une roue avant (11) et munie d'une tête de direction (13) pour guider cette roue avant ((11), ainsi qu'une carcasse (1) qui entoure au moins partiellement un habitacle (5) et présente un dispositif (20) pour guider une roue arrière (12), la partie frontale (15) renfermant une première coquille autoporteuse destinée à recevoir la roue avant (11), la carcasse (1) renfermant une seconde coquille qui est réalisée à la manière d'une coque de navire, est ouverte vers le haut au moins dans la région de l'habitacle (5), comporte une échancrure (16) ouverte vers le bas et entourant au moins partiellement la région marginale inférieure de la première coquille, et est reliée fermement à cette première coquille le long d'une ligne commune d'intersection (17), le dispositif (20) de guidage de la roue arrière (12) étant fixé dans la région postérieure de la seconde coquille, caractérisé par le fait que la première coquille entoure la roue avant (11) sensiblement à la manière d'une cloche; et par le fait que la tête de direction (13) est fixée exclusivement à la partie la plus haute de cette première coquille.

2. Véhicule selon la revendication 1, caractérisé par le fait que la ligne commune d'intersection (17) des deux coquilles se trouve dans la zone du fond de la seconde coquille et est délimitée, pour l'essentiel, par la région marginale inférieure de la première coquille et par la région de la seconde coquille qui délimite l'échancrure (16).

3. Véhicule selon la revendication 1 ou 2, caractérisé par le fait que la tête de direction (13) est reliée rigidement à la partie supérieure de la première coquille en forme de cloche par l'intermédiaire d'éléments d'entretoisement (23).

4. Véhicule selon l'une des revendications précédentes, caractérisé par le fait que la première coquille en forme de cloche est reliée à la zone marginale supérieure de la deuxième coquille par l'intermédiaire d'éléments d'entretoisement (25) s'étendant dans la direction transversale et/ou dans la direction longitudinale.

# Fig. 1

# Fig. 2

# Fig. 3

Fig. 4

Fig. 5

Fig. 6